# FASCICULE DE BREVET EUROPEEN

(11) **EP 2 111 124 B1**
(45) Date de publication et mention de la délivrance du brevet: **30.11.2011**
(21) Numéro de dépôt: 07748768.4
(22) Date de dépôt: 30.03.2007
(51) Int. Cl.: A23L 1/236

(54) **SOLUTION DE SUCRALOSE STERILE SANS CONSERVATEURS ET SON PROCÉDÉ DE PRÉPARATION**
STERILE SUCRALOSE-LÖSUNG OHNE KONSERVIERUNGSMITTEL UND DESSEN HERSTELLUNGSVERFAHREN
STERILE SUCRALOSE SOLUTION WITHOUT PRESERVATIVES AND PROCESS OF MANUFACTURE

(30) Priorité: 12.02.2007 TN 07056
(43) Date de publication de la demande: 28.10.2009
(73) Titulaire: Boujbel, Lassaad, 8000 Nabeul (TN)
(72) Inventeur: Boujbel, Lassaad, 8000 Nabeul (TN)
(74) Mandataire: Colombet, Alain André
(86) Numéro de dépôt international: PCT/TN2007/000002
(87) Numéro de publication internationale: WO 2008/100235

(56) Documents cités:
- EP-A- 0 493 919
- WO-A-02/18239
- US-A- 5 061 496
- US-A1- 2002 114 852
- US-A1- 2004 086 605
- ANONYMOUS: "Live SWEET! Live FREE! Sweetzfree!!" INTERNET ARTICLE, [Online] 1 janvier 2005 (2005-01-01), XP002485436 Extrait de l'Internet: URL:http://web.archive.org/web/20050101010 502/http://www.sweetzfree.com/> [extrait le 2008-06-23]

## Description

La présente invention se rapporte à une nouvelle composition d'un complément nutritionnel et à son procédé de fabrication. Il s'agit d'un édulcorant : sucralose en solution stérile sans conservateurs.

Cet édulcorant est principalement utilisé chez les personnes souffrantes du diabète ou de problèmes de poids. Il est aussi largement utilisé dans d'autres domaines et pour d'autres applications tel que dans l'industrie alimentaire destinée aux régimes diététiques.

Le diabète est une maladie ayant pour cause l'insuffisante sécrétion d'insuline par le pancréas (diabète dit insulinodépendant ou de type I), ou une réceptivité insuffisante des tissus à l'insuline entraînant un diabète sucré caractérisé par une élévation anormale de la glycémie (diabète dit non insulinodépendant ou de type II), ce dernier type de diabète est également appelé diabète gras parce que les malades atteints sont généralement obèses et concerne plus de 90% des diabétiques.

L'obésité et les problèmes de surpoids spécialement l'obésité pédiatrique sont considérés comme problème de santé de plus en plus inquiétant.

Les découvertes ont commencés depuis 1857 avec la saccharine. Mais ce ne sont que ces dernières années, qu'une large prise de conscience s'est effectuée et on a vu se développer sur le marché de plus en plus de produits édulcorants, faible ou sans apport calorique.

Les édulcorants qui ont été le plus couramment utilisées sont : la saccharine, les cyclamates et l'aspartame.

L'utilisation de la saccharine et cyclamates a été interdite dans certains pays à cause d'un possible effet cancérigène.

L'aspartame est encore considéré sans danger avec l'exception d'effets indésirables mineurs après un usage prolongé comme les migraines. L'aspartame présente aussi une faible stabilité, il se dégrade à chaud en générant des produits toxiques.

Suite à ces inconvénients un nouveau produit : le sucralose a été ainsi développé en 1976.

Il s'agit d'un édulcorant obtenu à partir du sucre ou sucrose naturel, ayant un pouvoir sucrant approximativement 600 fois supérieur à celui du sucre.

Son utilisation a été approuvée pour la première fois au Canada en 1991. Il a été approuvé ensuite en Australie en 1993, en Nouvelle-Zélande en 1996, aux USA en 1998, dans l'Union européenne en 2004, en Suisse en 2006. Actuellement il est approuvé pour utilisation dans plus de 23 pays.

Le sucralose présente plusieurs avantages par rapport aux autres édulcorants. Il n'est pas cancérigène, il est stable à la chaleur (contrairement à l'aspartame), il est stable en solution dans une large gamme de pH, ainsi il a une plus longue durée de vie.

Il peut être utilisé dans des denrées devant être cuites au four ou dans des denrées à longue durée de conservation.

Par ailleurs le sucralose est non cariogène et ne favorisé pas la prolifération de caries dentaires.

L'Union européenne, autorise l'adjonction de sucralose dans les produits suivants (liste non exhaustive) :
- Boissons non alcoolisées
- Desserts et produits similaires
- Confiseries
- moutarde

Le sucralose est disponible sur le marché et existe principalement sous forme de poudre ou comprimés et quelques fois sous forme liquide avec des conservateurs.

La forme solution présente une plus grande stabilité, toutefois la présence de conservateurs dans la forme solution présente plusieurs inconvénients et des risques d'effets indésirables. Des solutions de sucralose sont déjà connues de US 2004/0086605, US 5061496 et de EP 0493919. WO2005/020716 divulgue une solution d'aspartame dans un sac aseptique.

Il existe donc un besoin de réaliser une forme liquide plus stable et plus commode à l'usage sans les effets gênants des conservateurs.

C'est pourquoi la présente invention a pour objet une nouvelle composition et son procédé de fabrication aseptique permettant l'obtention de sucralose en solution stérile ne nécessitant pas l'ajout de conservateurs.

L'invention contient du sucralose et de l'eau pour préparations injectables fabriquée dans des conditions d'asepsie totale donnant un produit stérile ne nécessitant pas l'ajout de conservateurs. Toutes les opérations de fabrication sont effectuées conformément aux normes de Bonnes Pratiques de Fabrication régissant l'obtention d'un produit stérile.

Les opérations de pesée et de préparation du vrac sont effectuées sous flux laminaire en classe C. la préparation du vrac consiste en la dissolution d'une poudre de sucralose dans de l'eau pour préparations injectables, avec agitation jusqu'à dissolution complète et ajustement au volume final pour obtenir une solution dont la concentration est comprise entre : 0,1 mg/ml et 1 g/ml selon le choix.

La solution obtenue subit ensuite une stérilisation adéquate selon l'une des différentes méthodes de stérilisation d'un produit.

La stérilisation peut être notamment obtenue par filtration stérilisante avec un filtre hydrophile de 0,22 µm.

Ensuite la solution stérile obtenue est répartie aseptiquement sous flux laminaire classe A dans des flacons. Le bouchage des flacons s'effectue également dans les mêmes conditions.

L'invention sucralose en solution stérile est conditionnée dans des flacons de différentes capacités ces flacons peuvent être aussi des flacons à compte gouttes.

Cette invention présente plusieurs avantages :
➢ Commodité d'usage : solubilité très rapide dans les boissons, le café, le thé et les gâteaux ....
➢ Commodité d'utilisation et d'homogénéisation dans les formes pâteuses et semi solides
➢ Pour le flacon compte goutte, commodité d'utilisation du flacon de Sucralose : petit volume, usage pratique et propre
➢ Stabilité plus grande de cette forme solution,
➢ Résistance à la chaleur de cuisson : le sucralose est une molécule thermorésistante,
➢ Absence de conservateurs

## Revendications

1. Procédé de préparation d'une composition de sucralose en solution stérile, dans lequel on prépare la solution à partir de sucralose et d'eau pour préparations injectables, dans des conditions d'asepsie totale et en l'absence de conservateurs, le dit procédé comprenant :
(a) une étape de préparation du vrac par dissolution d'une poudré de sucralose dans de l'eau pour préparations injectables, les opérations de pesée et de préparation du vrac étant effectuées sous flux laminaire en classe C,
(b) une étape d'agitation jusqu'à dissolution complète de la poudre de sucralose dans l'eau,
(c) une étape d'ajustement de la concentration de la solution en sucralose à une valeur comprise enture 0,1 mg/ml et 1 g/ml.
(d) une étape de stérilisation de la solution de l'étape (c),
(e) une étape dans laquelle la solution stérile de l'étape (d) est répartie aseptiquement sous flux laminaire classe A dans des flacons compte-gouttes.

2. Procédé selon la revendication 1, **caractérisé en ce que** la stérilisation à l'étape (d) est obtenue par filtration stérilisante avec un filtre hydrophile de 0,22 µm.

3. Composition de sucralose en solution stérile susceptible d'être obtenue par le procédé selon la revendication 1 ou 2.

4. Composition selon la revendication 3, dépourvue de conservateurs.

## Claims

1. Method for the preparation of a sucralose composition in sterile solution, in which the solution is prepared from sucralose and water for injection under conditions of total asepsis and in the absence of preservatives, said method comprising:
(a) a step of bulk preparation by dissolving a sucralose powder in water for injection, the bulk weighing and preparation operations being carried out under class C laminar flow,
(b) a step of stirring until the sucralose powder is completely dissolved in the water,
(c) a step of adjustment of the concentration of the sucralose solution to a value comprised between 0.1 mg/ml and 1 g/ml,
(d) a step of sterilisation of the solution of step (c),
(e) a step in which the sterile solution of step (d) is divided aseptically under class A laminar flow into dropper containers.

2. Method according to claim 1, **characterised in that** the sterilisation in step (d) is obtained by sterilising filtration with a 0.22 µm hydrophilic filter.

3. Sucralose composition in sterile solution that may be obtained by the method according to claim 1 or 2.

4. Composition according to claim 3, without preservatives.

## Patentansprüche

1. Verfahren zur Herstellung einer Sucralose-Zusammensetzung in einer sterilen Lösung, bei dem die Lösung aus Sucralose und Wasser für einspritzbare Präparate bei Bedingungen vollständiger Keimfreiheit und ohne Konservierungsmittel hergestellt wird, wobei das Verfahren umfasst:
(a) einen Schritt der Herstellung von Massengut durch Lösen eines Sucralose-Pulvers in Wasser für einspritzbare Präparate, wobei die wiege- und Herstellungsvorgänge des Massenguts bei laminarem Strom der Klasse C durchgeführt werden,
(b) einen Schritt des Rührens bis das Sucralose-Pulver vollständig im Wasser gelöst ist,
(c) einen Schritt der Einstellung der Konzentration der Sucralose-Lösung auf einen Wert zwischen 0,1 mg/ml und 1g/ml,
(d) einen Schritt der Sterilisation der Lösung des Schrittes (c),
(e) einen Schritt, bei dem die sterile Lösung des Schrittes (d) aseptisch bei einem laminaren Strom der Klasse A in Flaschen mit Tropfröhrchen verteilt wird.

2. Verfahren nach Anspruch 1, **dadurch gekennzeichnet, dass** die Sterilisation des Schritts (d) durch sterilisierende Filterung mit einem hydrophilen Filter von 0,22 µm erhalten wird.

3. Sucralose-Zusammensetzung in steriler Lösung, die geeignet ist, durch das Verfahren nach Anspruch 1 oder 2 erhalten zu werden.

4. Zusammensetzung nach Anspruch 3, die ohne Konservierungsmittel ist.
